# EUROPEAN PATENT APPLICATION

(11) **EP 4 567 557 A1**
(43) Date of publication of application: **11.06.2025**
(21) Application number: 23307133.1
(22) Date of filing: 05.12.2023
(51) Int. Cl.: G06F 1/18

(54) **A CLAMP TOOL FOR INSERTING A CIRCUIT BOARD INTO A SOCKET**

(71) Applicant: BULL SAS, 78340 Les Clayes-Sous-Bois (FR)
(72) Inventor: MARGARIAN, Levon, 49000 Angers (FR)
(74) Representative: Argyma

(57) **Abstract**

The invention relates to a clamp tool (1) for inserting a circuit board (2) into a socket, said clamp tool (1) comprising a hollow casing (10) and a clamp mechanism (20), said casing (10) comprising a handle (110) and a base (120).

## Description

### [Field of the invention]

The invention relates to the field of circuit boards and, more particularly, to a device and a method for inserting a circuit board into a socket.

### [Background of the invention]

In electronical assembling, the insertion of a circuit board into a socket is a usual operation that can be repeated many times during a single day.

The circuit board may be of the Dual Inline Memory Module (DIMM) type and have different dimensions.

The insertion of the circuit board is carried out by a human operator who grabs and inserts the circuit board with his fingers in the socket until it locks into said socket.

However, such a circuit board may be fragile, and the force applied by the operator during the insertion may bend and deteriorate the circuit board. Moreover, as the circuit board comprises electronical components, handling the circuit board should be carried out in a way that prevents the possibility of the transmission of static electricity from the hands of the operator to the circuit board and the associated components.

At last, as the gesture is repeated over many occurrences, the insertion of circuit boards may lead to chronic pain and fatigue for the operator and the overall process may be time-consuming.

Several solutions, such as described in patent application US20070032114A1 and patent application US20150245529A1, have been developed in the state of the art.

These solutions describe a tool designed to be inserted on the top of the circuit board. Once fixed, the operator can press on the tool to insert the circuit board while preventing it from bending, ensuring an even repartition of the insertion force evenly.

However, this type of solution still requires a lot of repetitive movements for the operator before the insertion and requires some time to install the tool and remove it once the insertion is over.

Another solution, described in patent US10314219B2, relates to a tool configured to insert several circuit boards at the same time. This reduces the repetitive movements for the operator but requires to a precise installation to correctly insert the circuit boards, which may thus be also time consuming.

It is therefore an object of the present invention to provide a device and method to remedy at least partly these drawbacks.

### [Summary of the invention]

To this end, the present invention concerns a clamp tool for inserting a circuit board into a socket, said clamp tool comprising a hollow casing and a clamp mechanism, said casing comprising a handle and a base, wherein:
- said handle extends along a longitudinal axis and comprises a free end, a binding end opposed to the free end, a front portion extending between said free end and said binding end, and a rear portion extending between the free end and the binding end opposite the front portion, said front portion delimitating an opening in the half-part of the handle that comprises the free end, the binding end being linked to a middle portion of the base,
- said base extends along a longitudinal axis and comprises a proximal end, a distal end, an upper portion extending between said proximal end and said distal end, a lower portion extending between the proximal end and the distal end opposite the upper portion and delimitating a slot extending along a length of said lower portion, the binding end of the handle being bound to said upper portion, the base comprising a first stop element protruding from the lower portion,
- said clamp mechanism comprises a trigger, a lever, a moving element, said lever comprising a first end and a second end, said trigger being attached to the first end of the lever and extending partly through the opening of the handle, said moving element comprising a junction element, a rod and a second stop element, said junction element being mounted inside the base and being linked to the second end of the lever, said rod being mounted inside the base parallelly to the longitudinal axis of said base and comprising a driving end linked to the junction element and a free end, the second stop element protruding from the free end of the rod through the slot delimitated in the lower portion of the base and facing the first stop element, the moving element being configured to move between a released position, for which the distance between the first stop element and the second stop element is predetermined, and a closing position, for which the distance between the first stop element and the second stop element is smaller than said predetermined distance between the first stop element and the second stop element.

The clamp tool according to the invention allows the operator to hold the circuit board between the first stop element and the second stop element in the closing position while the configuration of the base also avoids the necessity for the operator to rotate their wrist twice during the operation of holding and inserting the circuit board, further reducing the repetitive gestures and preventing health and articular troubles for the user.

Advantageously, the handle and the base are made from the same material. This facilitates the production of the clamp tool.

Further advantageously, the handle and the base are cast in one piece or made from a single piece, which also facilitates the production of the clamp tool.

Preferably, the handle and the base are cast in an insulating material to prevent the transmission of static electricity from the hand of the operator to the clamp board.

In a first embodiment of the invention, the releasing position is obtained when the trigger is in a released state and the lever pushes the moving element and the second stop element towards the distal end of the base, and the closing position is obtained when the trigger is pressed and the lever pushes the moving element and the second stop element toward the proximal end. The clamp tool according to the invention allows the operator to hold the circuit board between the first stop element and the second stop element in the closing position while pressing continuously the trigger, which ensure the stability of the clamp tool during the insertion of the circuit board in the socket.

Preferably in the first embodiment, the trigger, the lever and the moving element are integrated together (i.e. cast in one piece). The resulting piece is easier to produce and can be cast from the same material.

In a second embodiment of the invention, the releasing position is obtained when the trigger is pressed and the lever pushes the moving element and the second stop element towards the distal end of the base, and the closing position is obtained when the trigger is in a released state and the lever pushes the moving element and the second stop element toward the proximal end. The clamp tool according to the invention allows the operator to hold the circuit board between the first stop element and the second stop element while not having to press continuously the trigger, which prevents repetitive gestures.

In a preferred embodiment of the clamp tool, the angle formed by the longitudinal axis of the handle, extending from the binding end to the free end, and the longitudinal axis of the base, extending from the proximal end to the distal end, is inferior to 90°. This ergonomic design is adapted to the shape of the human hand to prevent the fatigue due to repetitive use.

Preferably, the binding end of the handle is linked to the upper portion of the base closer to the proximal end of said base. In this design, the proximal end is blocked by the hand of the user which stabilize the clamp tool during the operation and ensures that there is enough space along the rest of the base for the moving element to travel.

Advantageously, the first stop element comprises a groove extending from the lower portion of the base, orthogonally to the base in the middle of the face of the first stop element facing the second stop element. The corner of the circuit board is inserted in the groove during the operation and ensures a better prehension of the circuit board.

Advantageously, the second stop element comprises a groove extending perpendicularly from the face of the free end of the rod facing the first stop element. The corner of the circuit board is inserted in the groove during the operation and ensures a better prehension of the circuit board.

According to an aspect of the invention, the trigger comprises a pressing face, a central portion and a sliding element and the handle comprises two sliding grooves facing each other extending from the front portion to the rear portion, said central portion extending through the opening of the front portion of the handle, said pressing face extending outside the handle and being linked to the central portion, said sliding element extending inside from the central portion and being inserted in said sliding grooves in a way allowing the trigger to move along the sliding grooves. The trigger moves only on a longitudinal axe and is ensured to not jam or be blocked during an operation, while being a simple design that may be easily replaced in case of a malfunction.

Preferably, the trigger comprises a junction piercing receiving the first end of the lever, said junction piercing being larger than the first end of the lever. This feature allows the trigger to move horizontally freely without being blocked by the rotating movement of the first end of the lever which goes up and down while turning around its axis.

In a preferred embodiment, the rod has a cross-shaped section, and the base comprises a corresponding groove in which the rod is configured to slide in. The rod is guided during its translation and is prevented to block or err to ensure the good prehension of the circuit board.

Advantageously, the junction element has a U-shaped, receiving the second end of the lever. This feature allows the second end of the lever to move free to move away from the driving end of the moving element due to the rotation of the lever around its axis while still pushing the moving element along the longitudinal direction of the base when the operator presses the trigger.

Advantageously, the clamp mechanism comprises a spring, permitting the clamp mechanism to return to its initial position when the trigger is not pressed by the operator.

Preferably, the junction element comprises a fixation stud, extending through a length of the spring, from the junction element in the direction of the free end of the rod and parallel to the rod. This feature allows a better fixation of the spring that prevent it to fall when the clamp tool is dismounted of to bend inside the clamp tool.

Advantageously, the axis of the lever is situated at the middle of the length of the lever. This feature allows the lever to be composed of two identical halves that are clipped head to tail symmetrically.

Advantageously, the lever comprises two opposite slots extending along of the axis of the lever, orthogonally from the middle of the length of the lever and wherein and designed to be inserted in corresponding piercings of the handle. This ensures the fixation of the lever inside the clamp tool without requiring an additional piece.

Alternatively, the lever comprises a piercing extending along of the axis of the lever orthogonally from the middle of the length of the lever designed to receive a fixation screw. This ensures the fixation of the lever inside the clamp tool.

In a preferred embodiment of the clamp tool, the hollow casing comprises a cylindrical drilling designed to receive the spring. The spring is inserted into the cylindrical drilling and is less prone to bend or to be blocked inside of the casing.

The invention also relates to a method for inserting of circuit board into a socket by an operator using a clamp tool according to the second embodiment presented here before, said circuit board comprising a grabbing edge extending between a first grabbing corner and a second grabbing corner, said method comprising the steps of:
- positioning the clamp tool in released position above said grabbing edge,
- lowering the clamp tool and positioning the first stop element against the first grabbing corner while aligning the second stop element with the second grabbing corner,
- pressing the trigger of the clamp tool to put it in the closing position,
- lifting up the clamp tool and the circuit board,
- inserting the circuit board into the socket,
- releasing the trigger so that the second stop element moves away from said second grabbing corner and the clamp tool is in released position, and separating the clamp tool from the inserted circuit board.

The invention also relates to a method for inserting of circuit board into a socket by an operator using a clamp tool according to the first embodiment presented here before, said circuit board comprising a grabbing edge extending between a first grabbing corner and a second grabbing corner, said method comprising the steps of:
- positioning the clamp tool in the closing position above said grabbing edge,
- pressing the trigger of the clamp tool to put it in the released position,
- lowering the clamp tool and positioning the first stop element against the first grabbing corner while aligning the second stop element with the second grabbing corner,
- releasing the trigger so that the second stop element abuts against said second grabbing corner in closing position,
- inserting the circuit board into the socket,
- pressing the trigger to release the clamp tool and pulling the clamp tool away from the inserted circuit board.

In a variant design, the trigger extends through the free end of the handle, which comprises the trigger opening, and is configurated to be pressed by the thumb of the operator during the handling of the circuit board.

### [Brief description of the drawings]

These and other features, aspects, and advantages of the present invention are better understood with regard to the following Detailed Description of the Preferred Embodiments, appended Claims, and accompanying Figures, where:
- figure 1 schematically illustrates the clamp tool according to the invention holding a circuit board.
- figure 2 illustrates a side view of the inside of clamp tool according to a embodiment of the invention.
- figure 3 illustrates a side view of the casing of the clamp tool according to the first embodiment of the invention.
- figure 4 illustrates a side view of one half of the casing of the clamp tool according to the first embodiment of the invention.
- figure 5 illustrates a below view of the clamp tool according to the first embodiment of the invention.
- figure 6 schematically illustrates a side view of the clamp mechanism of the first embodiment of the clamp tool according to the invention.
- figure 7 schematically illustrates a side view of the clamp mechanism of a second embodiment of the clamp tool according to the invention.
- figure 8 schematically illustrates a view in perspective of the trigger of the clamp mechanism of the clamp tool according to the invention.
- figure 9 schematically illustrates a view in perspective of the lever of the clamp mechanism of the clamp tool according to the invention.
- figure 10 schematically illustrates a view in perspective of one half of the lever of the clamp mechanism of the clamp tool according to the invention.
- figure 11 schematically illustrates a view in perspective of the moving element of the clamp mechanism of the clamp tool according to the invention.
- figure 12 schematically illustrates another view in perspective of the moving element of the clamp mechanism of the clamp tool according to the invention.
- figure 13 schematically illustrates the first step of the method using the first embodiment of the invention.
- figure 14 schematically illustrates the second step of the method using the first embodiment of the invention.
- figure 15 schematically illustrates the third step of the method using the first embodiment of the invention.

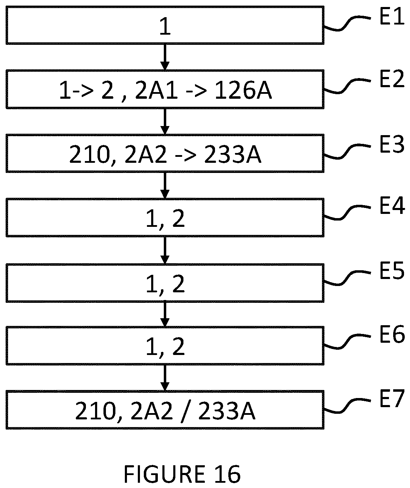

- figure 16 schematically illustrates the method using the first embodiment of the invention.

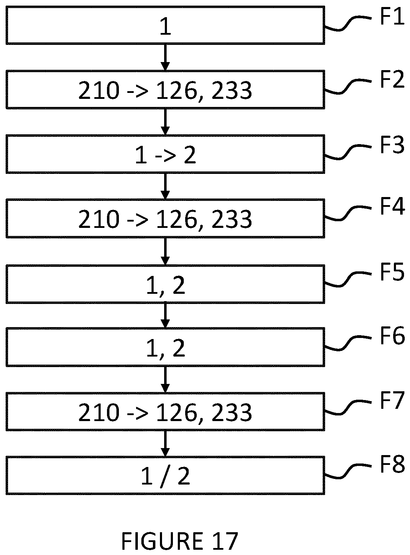

- figure 17 schematically illustrates the method using the second embodiment of the invention.

### [Detailed description]

Reference will now be made in detail to specific embodiments or features, examples of which are illustrated in the accompanying drawings. Wherever possible, corresponding or similar reference numbers will be used throughout the drawings to refer to the same or corresponding parts. Moreover, references to various elements described herein are made collectively or individually when there may be more than one element of the same type. However, such references are merely exemplary in nature. It may be noted that any reference to elements in the singular may also be construed to relate to the plural and vice-versa without limiting the scope of the disclosure to the exact number or type of such elements unless set forth explicitly in the appended claims.

The Specification, which includes the Summary of Invention, Brief Description of the Drawings and the Detailed Description of the Preferred Embodiments, and the appended Claims refer to particular features (including process or method steps) of the invention. Those of skill in the art understand that the invention includes all possible combinations and uses of particular features described in the Specification. Those of skill in the art understand that the invention is not limited to or by the description of embodiments given in the Specification. Those of skill in the art also understand that the terminology used for describing particular embodiments does not limit the scope or breadth of the invention.

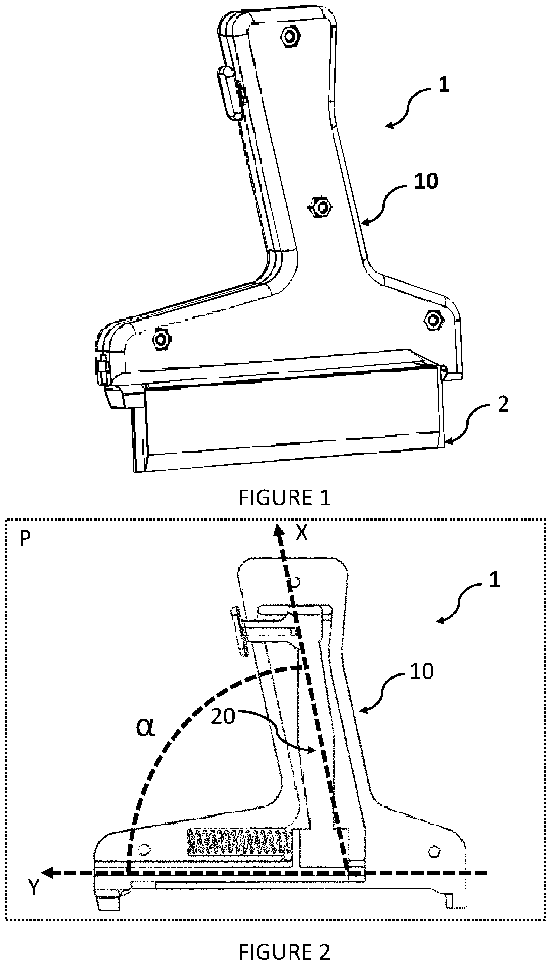

As shown in figure 1, the clamp tool 1 comprises a hollow casing 10 and is used to pull or insert a circuit board 2 into a socket (not shown).

As illustrated on figure 2, the clamp tool 1 comprises a clamp mechanism 20 extending partly inside the casing 10.

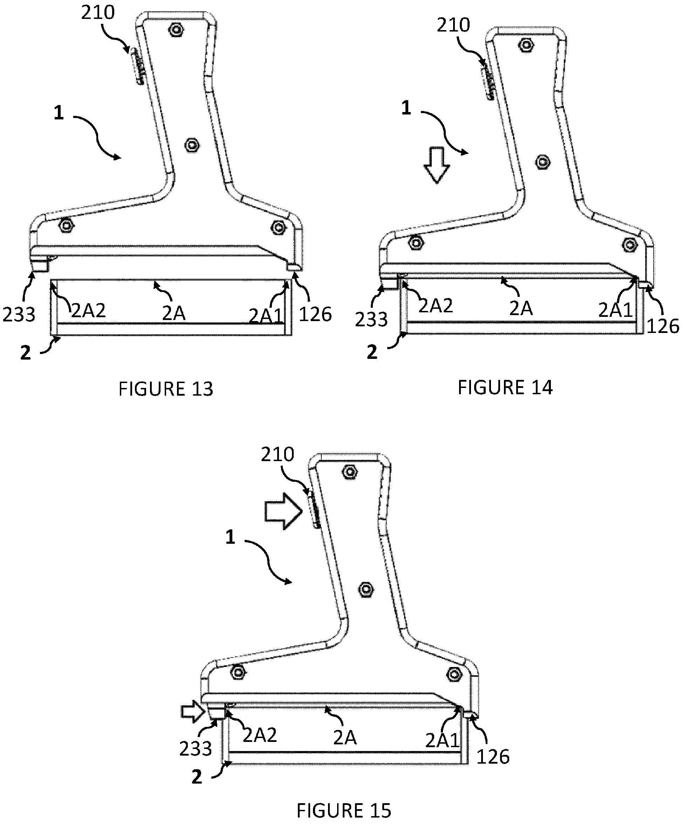

As illustrated on figures 13-15, the circuit board 2 comprises a grabbing edge 2A extending between a first grabbing corner 2A1 and a second grabbing corner 2A2. The grabbing edge 2A corresponds to the edge of the circuit board 2 that is to be seized to insert into or to retrieve the circuit board 2 from the socket.

### Casing 10

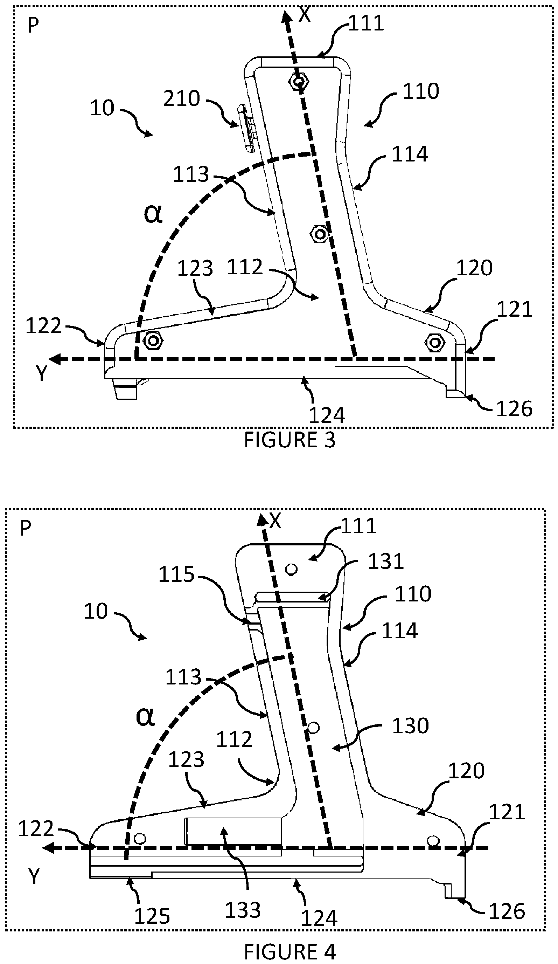

As shown in figure 3, the casing 10 comprises a handle 110 extending along a longitudinal axis X and a base 120 extending along a longitudinal axis Y. The handle 110 and the base 120 extend inside a plane P.

Preferably, the handle 110 and the base 120 are cast in one piece, for example made of plastic or a metallic material.

As shown in the figure 4, the casing 10 is hollow and defines an internal cavity 130 configured to receive the clamp mechanism 20.

The casing 10 comprises preferably two symmetrical halves, each one having one half of the handle 110 and one half of the base 120, which are fixed together by several screws and bolts.

### Handle 110

As represented on figures 3 and 4, the handle 110 comprises a free end 111, a binding end 112, a front portion 113, a rear portion 114 and a trigger opening 115.

The handle extends along the longitudinal axis X pointing from the binding end 112 to the free end 111.

The free end 111 is adapted to receive the thumb of the operator during the handling of the clamp tool 1.

The front portion 113 presents the trigger opening 115 on the half closer to the free end 111. The trigger 210 extends through the trigger opening 115, and the operator may pull the trigger 210 with their index during the handling of the clamp tool 1.

### Base 120

The base 120 comprises a proximal end 121, a distal end 122, an upper portion 123, a lower portion 124, a slot 125 and a first stop element 126.

The base 120 extends along a longitudinal axis Y, pointing from the proximal end 121 to the distal end 122.

As illustrated on figure 3, in this non-limiting embodiment, the angle α formed between the axis Y and the longitudinal axis X has a value inferior to 90°.

The binding end 112 is located on the half of the upper portion 123 that is closer to the proximal end 121.

As represented on figure 4, the binding end 112 of the handle 110 is linked to the upper portion 123 of the base 120.

The lower portion 124 comprises a slot 125 and a first stop element 126.

The slot 125 extends from the distal end 122 through a length of the half of the lower portion 124 closer to the distal end 122.

The first stop element 126 extends from the proximal end 121 orthogonally from the lower portion 124 and opposite to the handle 110.

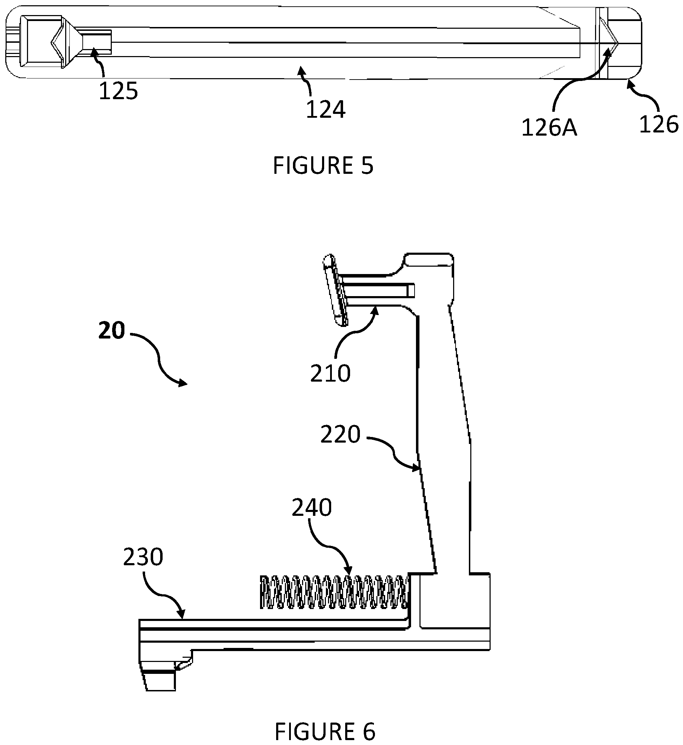

As represented on the figure 5, the first strop element 126 comprises a first groove 126A, extending on the middle of face of the first stop element facing the distal end 122 and orthogonally from the lower portion 124.

### Clamp mechanism 20

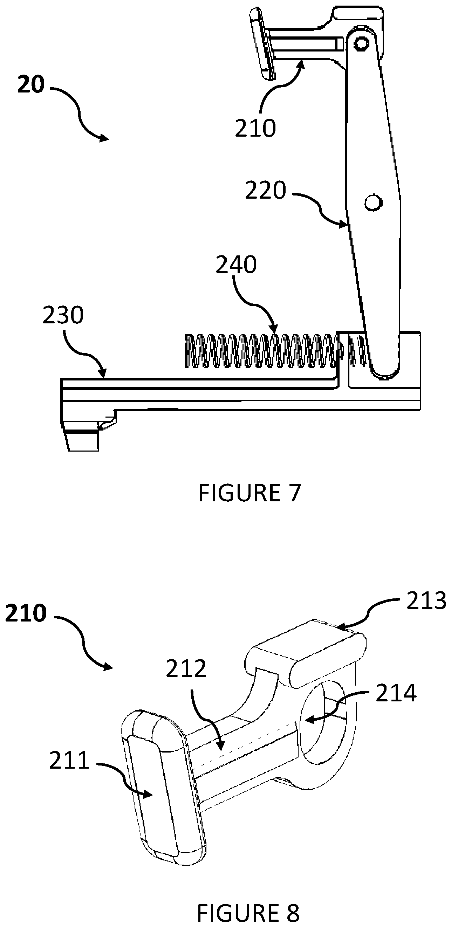

As represented on the figures 6 and 7, the clamp mechanism 20 comprises a trigger 210, a lever 220, a moving element 230 and a spring 240.

In a first embodiment of the invention represented on figure 6, the trigger 210, the lever 220 and the moving element 230 form a single element and are not able to move relatively from one another.

As represented on figure 6, the trigger 210, the lever 220 and the moving element 230 are cast in the same material.

In the second embodiment of the invention, the trigger 210, the lever 220 and the moving element 230 are independent pieces that are able to move relatively from one another with a certain degree of liberty as represented on figure 7.

The clamp mechanism 20 extends mostly in the internal cavity 130 of the casing 10 as represented on figures 2 and 4.

### Trigger 210

As represented on the figure 8, the trigger 210 comprises a pressing face 211, a central portion 212 and a sliding element 213.

The central portion 212 is a plate extending in the plane P. The central portion 212 extends partly through the trigger opening 115 and is linked to the pressing face 211 and to the sliding element 213.

The pressing face 211 extends outside the handle, sensibly parallelly to the front portion 113 and is designer for the operator to place their index on it during the handling of the clamp tool 1.

The sliding element 213 is a plate extending perpendicularly to the central portion 212 from the side of the central portion 212 closer to the free end 111. The sliding element 213 is inserted in the sliding grooves 131 of the cavity 130.

In the second embodiment of the invention, the central portion 212 comprises a junction piercing 214 which links the trigger 210 to the lever 220.

### Lever 220

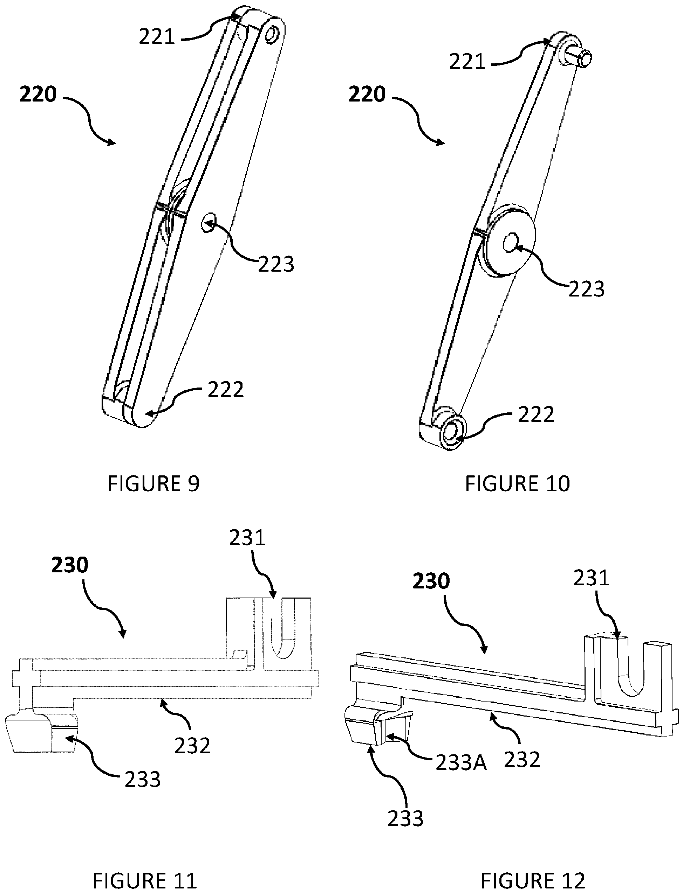

The figures 9 and 10 represent the lever 220 according to the second embodiment of the invention.

As represented on figure 9, the lever 220 comprises a first end 221, a second end 222 and an axis 223.

In the second embodiment of the invention, the lever 220 comprises two identical halves that are clipped together head to tail as represented on the figure 10.

At the first end 221 each half comprises a cylinder. When the lever 220 is assembled, the two cylinders are clipped through the junction piercing 214. The two cylinders have a diameter inferior to the dimensions of the junction piercing 214.

The axis 223 is located at the middle of the length of the lever 220. The axis 223 is hollowed up in both halves of the lever 220 and is fixed to the casing 10 with a screw extending orthogonally to the plane P, through the rotation piercing 132 of the handle 110 and the axis 223.

At the second end 222 each half comprises a cylinder. When the lever 220 is assembled, the two cylinders are clipped together and inserted in the junction element 231 of the moving element 230.

### Moving element 230

The moving element 230 comprises a junction element 231, a rod 232 and a second stop element 233. The moving element 230 is mobile inside the base 120.

In the second embodiment of the invention, the junction element 231 is U-shaped with the opening facing the free end 111 of the handle 110 as represented in figure 11.

The rod 232 has a section in the form of a cross and extends from the face of the junction element 231 facing the distal end 122 to the distal end 122 along the longitudinal axis Y. The rod 232 extends from the half of the junction element 231 closer to the lower portion 124 of the base 120.

The second stop element 233 extends from the end of the rod 232 opposite to the junction element 231. It extends through the slot 125 of the lower portion 124 on the opposite of the handle 110.

As represented on the figure 12, the second strop element 233 comprises both in the first and the second embodiment a second groove 233A, extending on the middle of face of the second stop element 233 facing the proximal end 121 and orthogonally from the lower portion 124.

### Spring 240

The spring 240 extends from the face of the junction element 231 facing the distal end 122 to the inside wall of the casing 10 along the longitudinal axis Y and is inserted in the cylindrical drill 133.

In the first embodiment of the invention, the spring 240 is fixed on the casing 10 and on the junction element 231 and has a resting length shorter than the minimal distance between the casing 10 and the junction element 231.

In an alternative design of the first embodiment not shown in the figures, the spring 240 extends from the face of the junction element 231 facing the proximal end 121 to the inside wall of the casing 10 along the longitudinal axis Y and has a resting length longer than the minimal distance between the casing 10 and the junction element 231.

In the second embodiment of the invention, the spring 240 has a resting length longer than the minimal distance between the casing 10 and the junction element 231.

### Internal cavity 130

The internal cavity 130 is formed by the reunion of the two halves of the casing 10.

As represented on the figure 4, the internal cavity 130 comprises two sliding grooves 131, a rotation piercing 132 and a cylindrical drill 133.

The two sliding grooves 131 extends opposite to each other, on each half of the casing 10, along the longitudinal axis Y from the rear portion 114 to the front portion 113.

The cylindrical drilling 133 extends inside the base 120 along the longitudinal axis Y. The cylindrical drilling 133 is shorter in length than the spring 240 and has a radius sensibly equal to the radius of the spring 240.

### Example of operation

Prior to the method of insertion of a circuit board 2 in a socket, the operator grabs the handle 110 of the clamp tool 1 and positions their fingers around it, notably the index on the trigger 210 and the thumb on the free end 111.

### First embodiment

In a step E1, illustrated on figure 13, the operator positions the clamp tool 1 according to the first embodiment of the invention above a circuit board 2 so that the circuit board 2 is aligned with plane P.

In a step E2, illustrated on figure 14, the operator lowers the clamp tool 1 to position the first stop element 126 of the base 120 against the first grabbing corner 2A1 of the circuit board 2 and to align the lower portion 124 along the grabbing edge 2A of the circuit board 2.

The first grabbing corner 2A1 adjacent to the first stop element 126 is inserted in the first groove 126A to align it with the clamp tool 1 and to maximize friction.

Once the clamp tool 1 is positioned over the circuit board 2, the operator presses the trigger 210 of the clamp tool 1 in step E3, as illustrated figure 15.

The trigger 210 recedes towards the rear portion 114 along the sliding grooves 131 and drives he second stop element 233 towards the second grabbing corner 2A2 of the circuit board 2. As the junction element 230 moves along the longitudinal axis Y, it extends the spring 240.

The insertion of the second grabbing corner 2A2 into the second groove 233A of the second stop element 233 ensures the alignment of the circuit board 2 between the first stop element 126 and the second stop element 233.

Once the second grabbing corner 2A2 is inserted in the second groove 233A of the second stop element 233, the clamp tool 1 has grabbed the circuit board 2 and the operator is able in step E4 to lift the clamp tool 1 with the circuit board 2 while still pressing the trigger 210.

In a step E5, the operator moves the clamp tool 1 to position the circuit board 2 above the socket.

In a step E6, the operator inserts the circuit board 2 in the socket by lowering the clamp tool 1.

In a step E7, the operator releases the trigger 210 of the clamp tool 1 and lift the clamp tool 1. The extended spring 240 is not constrained anymore by the position of the trigger 210 and contracts itself, driving the clamp mechanism towards the distal end 122 and its initial position.

The reverse method may be used with a circuit board 2, which is inserted into a socket, to pull out said circuit board 2 from said socket.

### Second embodiment

In a step F1, the operator positions the clamp tool 1 according to the second embodiment of the invention above a circuit board 2 so that the circuit board 2 is aligned with plane P.

In a step F2, the operator presses the trigger 210 of the clamp tool 1.

The trigger 210 recedes towards the rear portion 114 along the sliding grooves 131 and pushes the first end of the lever 220. The lever 220 rotates around the axis 233 and the second end 222 pushes forward the junction element 231 of the moving element 230. As the junction element 230 moves along the longitudinal axis Y, it compresses the spring 240 and the second stop element 233 is moved further away from the first stop element 126 through the slot 125.

Once the first stop element 126 and the second stop element 233 are further apart, the operator lowers the clamp tool 1 in a step F3 to position the first stop element 126 of the base 120 against the first grabbing corner 2A1 of the circuit board 2 and to align the lower portion 124 along the grabbing edge 2A of the circuit board 2.

The first grabbing corner 2A1 adjacent to the first stop element 126 is inserted in the first groove 126A to align it with the clamp tool 1 and to maximize friction.

Once the clamp tool 1 is positioned over the circuit board 2, the operator releases the trigger 210 in a step F4.

The operator does not apply a force on the clamp mechanism 20 anymore, so the spring 240 pushes back the moving element 230, thus pushing the second stop element 233 against the second grabbing corner 2A2 of the circuit board 2 opposite to the first grabbing corner 2A1 abutting against the first stop element 126.

The insertion of the second grabbing corner 2A2 into the second groove 233A of the second stop element 233 ensures the alignment of the circuit board 2 between the first stop element 126 and the second stop element 233. The spring 240 exerts a force on the circuit board 2 that is sufficient to lift the clamp tool 1 without allowing the circuit board 2 to fall.

In a step F5, the operator moves the clamp tool 1 to position the circuit board 2 above the socket.

In a step F6, the operator inserts the circuit board 2 in the socket by lowering the clamp tool 1.

In a step F7, the operators pull again the trigger 210 of the clamp tool 1. As in step F2, the clamp mechanism 20 pushes the moving element 230 towards the distal end 122 and the second stop element 233 is no longer pressing on the second grabbing corner 2A2 of the circuit board 2.

The operator is then able to withdraw the clamp tool 1 from the circuit board 2 in a step F8. The operator may release the trigger 210 if the task is over or position the clamp tool 1 over another circuit board 2 and repeat the method.

The reverse method may be used with a circuit board 2, which is inserted into a socket, to pull out said circuit board 2 from said socket.

## Claims

1. A clamp tool (1) for inserting a circuit board (2) into a socket, said clamp tool (1) comprising a hollow casing (10) and a clamp mechanism (20), said casing (10) comprising a handle (110) and a base (120), wherein:
- said handle (110) extends along a longitudinal axis (X) and comprises a free end (111), a binding end (112) opposed to the free end (111), a front portion (113) extending between said free end (111) and said binding end (112), and a rear portion (114) extending between the free end (111) and the binding end (112) opposite the front portion (113), said front portion (113) delimitating an opening (115) in the half-part of the handle (110) that comprises the free end (111), the binding end (112) being linked to a middle portion of the base (120),
- said base (120) extends along a longitudinal axis (Y) and comprises a proximal end (121), a distal end (122), an upper portion (123) extending between said proximal end (121) and said distal end (122), a lower portion (124) extending between the proximal end (121) and the distal end (122) opposite the upper portion (123) and delimitating a slot (125) extending along a length of said lower portion (124), the binding end (112) of the handle (110) being bound to said upper portion (123), the base (120) comprising a first stop element (126) protruding from the lower portion (124),
- said clamp mechanism (20) comprises a trigger (210), a lever (220), a moving element (230), said lever (220) comprising a first end (221) and a second end (222) and being mounted inside the handle (110), said trigger (210) being attached to the first end (221) of the lever (220) and extending partly through the opening (115) of the handle (110), said moving element (230) comprising a junction element (231), a rod (232) and a second stop element (233), said junction element (231) being mounted inside the base (120) and being linked to the second end (222) of the lever (220), said rod (232) being mounted inside the base (120) parallelly to the longitudinal axis (Y) of said base (120) and comprising a driving end linked to the junction element (231) and a free end, the second stop element (233) protruding from the free end of the rod (232) through the slot (125) delimitated in the lower portion (124) of the base (120) and facing the first stop element (126), the moving element (230) being configured to move between a released position, for which the distance between the first stop element (126) and the second stop element (233) is predetermined, and a closing position, for which the distance between the first stop element (126) and the second stop element (233) is smaller than said predetermined distance between the first stop element (126) and the second stop element (233).

2. A clamp tool (1) according to the claim 1, wherein the releasing position is obtained when the trigger (210) is in a released state and the lever (220) pushes the moving element (230) to and the second stop element (233) towards the distal end (122) of the base (120), and the closing position is obtained when the trigger (210) is pressed and the lever (220) pushes the moving element (230) and the second stop element (233) toward the proximal end (121).

3. A clamp tool (1) according to the previous claim, wherein the trigger (210), the lever (220) and the moving element (230) are cast in one piece.

4. A clamp tool (1) according to the claim 1, wherein the releasing position is obtained when the trigger (210) is pressed and the lever (220) pushes the moving element (230) and the second stop element (233) towards the distal end (122) of the base (120), and the closing position is obtained when the trigger (210) is in a released state and the lever (220) pushes the moving element (230) and the second stop element (233) toward the proximal end (121).

5. A clamp tool (1) according to any one of the previous claims, wherein the angle (α) formed by the longitudinal axis (X) of the handle (110), extending from the binding end (112) to the free end (111), and the longitudinal axis (Y) of the base (120), extending from the proximal end (121) to the distal end (122), is inferior to 90°.

6. A clamp tool (1) according to any one of the previous claims, wherein the binding end (112) of the handle (110) is linked to the upper portion (123) of the base (120) closer to the proximal end (121) of said base (120).

7. A clamp tool (1) according to any one of the previous claims, wherein the first stop element (126) comprises a first groove (126A) extending from the lower portion (124) of the base (120), orthogonally to the base (120) in the middle of the face of the first stop element (126) facing the second stop element (233).

8. A clamp tool (1) according to any one of the previous claims, wherein the second stop element (233) comprises a second groove (233A) extending perpendicularly from the face of the free end of the rod (232) facing the first stop element (126).

9. A clamp tool (1) according to any one of the previous claims, wherein the trigger (210) comprises a pressing face (211), a central portion (212) and a sliding element (213) and the handle (110) comprises two sliding grooves (131) facing each other extending from the front portion (113) to the rear portion (114), said central portion (212) extending through the opening (115) of the front portion (113) of the handle (110), said pressing face (211) extending outside the handle (110) and being linked to the central portion (212), said sliding element (213) extending inside from the central portion (212) and being inserted in said sliding grooves (131) in a way allowing the trigger (210) to move along the sliding grooves (131).

10. A clamp tool (1) according to any one of the previous claims, wherein the trigger (210) comprises a junction piercing (214) receiving the first end (221) of the lever (220), said junction piercing (214) being larger than the first end (221) of the lever (220).

11. A clamp tool (1) according to any one of the previous claims, wherein the rod (232) has a cross-shaped section, and the base (120) comprises a corresponding groove in which the rod (232) is configured to slide in.

12. A clamp tool (1) according to any one of the previous claims, wherein the junction element (231) has a U-shaped, receiving the second end (222) of the lever (220).

13. A clamp tool (1) according to any one of the previous claims, wherein the axis (223) of the lever (220) is situated at the middle of the length of the lever (220).

14. A clamp tool (1) according to any one of the previous claims, wherein the lever (220) comprises a piercing extending along of the axis (223) of the lever (220) orthogonally from the middle of the length of the lever (220).

15. A method for inserting of circuit board (2) into a socket by an operator using a clamp tool (1) according to any one of the previous claims, said circuit board (2) comprising a grabbing edge (2A) extending between a first grabbing corner (2A1) and a second grabbing corner (2A2), said method comprising the steps of:
- positioning (E1) the clamp tool (1) in the released position above said grabbing edge (2A),
- lowering (E2) the clamp tool (1) and positioning the first stop element (126) against the first grabbing corner (2A1) while aligning the second stop element (233) with the second grabbing corner (2A2),
- pressing (E3) the trigger (210) of the clamp tool (1) to put it in the closing position,
- lifting up (E4) the clamp tool (1) and the circuit board (2),
- inserting (E6) the circuit board (2) into the socket,
- releasing (E7) the trigger (210) so that the second stop element (233) moves away from said second grabbing corner (2A2) and the clamp tool (1) is in the released position, and separating the clamp tool (1) from the inserted circuit board (2).
